# EUROPÄISCHE PATENTSCHRIFT

(11) **EP 0 447 810 B1**
(45) Veröffentlichungstag und Bekanntmachung des Hinweises auf die Patenterteilung: **14.12.1994**
(21) Anmeldenummer: 91102305.9
(22) Anmeldetag: 19.02.1991
(51) Int. Cl.: G01C 9/06, G01C 9/20, G01F 23/22, G01P 15/12, G01G 1/18

(54) **Elektrische Messanordnung zur Messung bzw. Berechnung des Füllstandes oder anderer mechanischer Daten einer elektrisch leitenden Flüssigkeit**
Measuring device for filling level or other mechanical properties of electrically conductive liquid
Dispositif de mesure de niveau ou autre propriété mécanique d'un liquide conducteur

(30) Priorität: 07.03.1990 DE 4007232; 10.09.1990 DE 4028730; 08.10.1990 DE 4031845; 14.11.1990 DE 4036262
(43) Veröffentlichungstag der Anmeldung: 25.09.1991
(73) Patentinhaber: HL PLANARTECHNIK GMBH, 44227 Dortmund (DE)
(72) Erfinder: Fidelak, Michael, W-4703 Bönen (DE); Bartsch, Marlies, W-5860 Iserlohn 7 (DE)
(74) Vertreter: von Rohr, Hans Wilhelm, Dipl.-Phys.

(56) Entgegenhaltungen:
- EP-A- 0 358 788
- DE-A- 2 551 798
- DE-A- 3 411 252
- DE-A- 3 920 246
- GB-A- 993 715
- US-A- 4 779 353

## Beschreibung

Die Erfindung betrifft eine elektrische Meßanordnung zur konduktometrischen Messung des Füllstandes oder daraus abgeleiteter mechanischer Daten einer in einem vorzugsweise geschlossenen Behälter befindlichen, elektrisch leitenden Flüssigkeit, die feststehende elektrische Eigenschaften aufweist, mit den Merkmalen des Oberbegriffs von Anspruch 1. Als Flüssigkeit kommt im Rahmen dieser Lehre insbesondere normal leitendes Wasser in Frage.

Die Erfindung bezieht sich auf eine elektrische Meßanordnung zur konduktometrischen Messung des Füllstandes, grenzt sich also gegenüber elektrischen Meßanordnungen zur kapazitiven Messung des Füllstandes ab. Nicht nur unmittelbar der Füllstand, sondern auch daraus abgeleitete mechanische Daten der Flüssigkeit, insbesondere also die Neigung des Flüssigkeitspiegels, können Ziel der Messung mit der beanspruchten elektrischen Meßanordnung sein. Der Begriff des Füllstandes einer in einem Behälter befindlichen Flüssigkeit macht dabei weiterhin deutlich, daß es sich um eine Flüssigkeit mit einem im wesentlichen ebenen Flüssigkeitsspiegel handeln muß, deren Füllstand im Behälter überhaupt als solcher gemessen werden kann.

Ausgangspunkt für die Lehre der Erfindung ist eine elektrische Meßanordnung zur konduktometrischen Messung des Füllstandes einer in einem Behälter befindlichen Elektrolytflüssigkeit, die Sensorelektroden im Behälter benetzt (DE - A - 34 11 252). Mit dieser elektrischen Meßanordnung wird der Füllstand im hier oben offenen Behälter festgestellt und daraus die Neigung des Kraffahrzeugs, in dem dieser Behälter angeordnet ist, ermittelt. Wesentlich ist, daß sich an dieser Flüssigkeit im Behälter überhaupt ein Flüssigkeitsspiegel ausbildet, der Behälter also nur teilweise mit der Flüssigkeit gefüllt ist, so daß oberhalb der Flüssigkeit ein vollflächiger Freiraum verbleibt. Auch wenn der Behälter bei diesem Stand der Technik oben offen gezeigt ist, wird man häufig zur Vermeidung eines Flüssigkeitsverlustes den Behälter oben auch geschlossen ausführen.

Bei der bekannten, zuvor erläuterten elektrischen Meßanordnung sind zwei Meßsensoren realisiert, die jeweils zwei in einem bestimmten seitlichen Abstand voneinander liegende, mit der Flüssigkeit benetzte Meßelektroden aufweisen. Die Elektroden sind als Stabelektroden oder Plattenelektroden ausgeführt und tauchen von oben her senkrecht in die Flüssigkeit ein, und zwar über eine Länge, die mindestens gleich der maximalen Höhendifferenz des Flüssigkeitsniveaus am Ort der jeweiligen Meßelektode ist. Aus dem gemessenen Verhältnis der Widerstände läßt sich unmittelbar und kontinuierlich der Wert der Neigung des Flüssigkeitsspiegels ermitteln.

Bei dem bekannten stand der Technik ist der Behälter um eine jedenfalls virtuell mittig am Boden des Behälters befindliche Kippachse kippbar, wobei die Meßsensoren beidseits der jedenfalls virtuell mittig liegenden Kippachse wirksam sind. Die Kippachse muß logischerweise nicht körperlich in der Mitte liegen, der Behälter kann schließlich auch um eine weitab liegende Kippachse kippen. Virtuell ist die Kippachse aber stets mittig am Boden des Behälters vorhanden, weil jede Kippung letztlich in eine Kippbewegung um die mittig am Boden virtuell vorhandene Kippachse und eine Verlagerung des Behälters parallel zu sich selbst zerlegt werden kann.

Die zuvor erläuterte Meßanordnung ist mit ihren Stab- oder Plattenelektroden konstruktiv relativ aufwendig und mechanisch relativ empfindlich. Aus weiterem Stand der Techik (GB - A - 993,715) ist eine elektrische Meßanordnung zur konduktometrischen Messung in einer in einem Behälter befindlichen, elektrisch leitenden Flüssigkeit bekannt, bei der die konduktometrische Messung mit zwei am Boden des Behälters angeordneten Meßsensoren mit jeweils zwei in einem bestimmten seitlichen Abstand voneinander liegenden, mit der Flüssigkeit kontaktierenden Meßelektroden erfolgt. Diese Meßelektroden sind am Boden des Behälters flächig angeordnet und bilden jeweils ein Streufeld in der Flüssigkeit aus. Diese bekannte elektrische Meßanordnung dient - ausschließlich - zur Neigunsmessung. Dazu ist der Behälter in bestimmter Weise geformt, nämlich bogenförmig gekrümmt nach Art einer Libelle. Das ist erforderlich, damit eine Luftblase in der Flüssigkeit immer definiert an der Decke des Behälters gegenüber dem Boden und den dort angeordneten Meßelektroden liegt.

Von erheblicher Bedeutung ist es, daß hier nicht der Füllstand der im Behälter befindlichen Flüssigkeit gemessen wird. Ein solcher Füllstand ist hier überhaupt nicht definiert, da die Luftblase nur eine Innenfläche, nicht aber einen regelrechten Flüssigkeitsspiegel der Flüssigkeit im Behälter definiert. Das ist auch logisch, soll doch die Luftblase ihre Lage an der bogenförmigen Decke des Behälters je nach Neigung des Behälters nach links und rechts sichtbar verändern. Damit ist auch klar, daß sich das Streufeld über jeweils zwei Meßelektroden in der Flüssigkeit bis zur Decke des Behälters erstreckt, wenn die Luftblase sich aus diesem Bereich in den Bereich der anderen Meßelektroden hinüber bewegt hat. Die Einschnürung der Feldlinien des Streufeldes durch die in das Streufeld eintretende und die Flüssigkeit dort verdrängende Luftblase verändert den Stromfluß über die Meßelektroden und damit den letztlich extern gemessenen Leitwert.

Die Meßgenauigkeit einer elektrischen Meßanordnung mit Libelle wie in der GB - A - 993,715 dargestellt und beschriebenen, ist in erster Linie von der Formgebung des notwendigerweise gebogenen Behälters definiert. Die Meßgenauigkeit der aus dieser Entgegenhaltung bekannten elektrischen Meßanordnung zur konduktometrischen Messung einer Neigung wird durch folgende Faktoren begrenzt:

Die Maßhaltigkeit des notwendigerweise gebogenen Behälters ist wichtig, bedingt aber hohe Herstellungskosten. Die Meßgenauigkeit ist durch die Reibung der Flüssigkeit insbesondere an der Decke des Behälters seitlich der Luftblase begrenzt. Da die Oberflächenspannung der Flüssigkeit im Bereich der Luftblase sich mitten in den Streufeldbereichen der Meßsensoren auswirkt, stellt dies eine wesentliche, die Meßgenauigkeit begrenzende Einflußgröße dar. Im Extremfall klebt die Luftblase bei nur geringer Neigungsänderung an der Decke des Behälters fest, so daß eine Neigungsmessung geringe Änderungen gar nicht erfaßt. Schließlich verändert sich die Größe der Luftblase mit der Temperatur mit starker Auswirkung auf das Meßergebnis.

Der Erfindung liegt die Aufgabe zugrunde, die bekannte, eingangs erläuterte elektrische Meßanordnung zur konduktometrischen Messung des Füllstandes oder daraus abgeleiteter mechanischer Daten einer in einem Behälter befindlichen, elektrisch leitenden Flüssigkeit bei hoher Genauigkeit möglichst preisgünstig zu gestalten.

Die zuvor aufgezeigte Aufgabe ist bei einer Meßanordnung mit den Merkmalen des Oberbegriffs von Anspruch 1 durch die Merkmale des kennzeichnenden Teils von Anspruch 1 gelöst. Erfindungsgemäß wird die Konstruktion der elektrischen Meßanordnung dadurch wesentlich vereinfacht und die Robustheit der Meßanordnung erheblich verbessert, daß die Meßsensoren mit ihren Meßelektroden am Boden des Behälters flächig angeordnet sind. Die Ausrichtung und Befestigung der Meßelektroden der Meßsensoren ist damit von selbst über den Boden des Behälters (bei einer bevorzugten Ausführungsform überdies auch ergänzend über die Wand des Behälters) gewährleistet, damit ist die elektrische Meßanordnung außerordentlich robust und extrem kostengünstig herzustellen. Mit dieser Maßnahme gelingt es, eine elektrische Meßanordnung mit sehr hoher Meßgenauigkeit und trotzdem sehr geringen Kosten herzustellen.

Streufeldsensoren sind für sich seit langem für die Messung der elektrolytischen Leitfähigkeit einer Flüssigkeit bekannt (vgl. "messen + prüfen/automatik" Oktober 1976, 554, 563). Für die Theorie und Meßtechnik mit Streufeldsensoren wird daher auf diese Fachliteratur verwiesen. Wesentlich ist, daß ein als Streufeldsensor ausgeführter Meßsensor durchaus auch vier oder sechs Meßelektroden aufweisen kann, wenn man berücksichtigt, daß es aus meßtechnischen Gründen zweckmäßig ist, die Stromelektroden von den Spannungselektroden für die Potentialmessung zu trennen. Dadurch liegen Polarisationseffekte an den stromdurchflossenen Elektroden außerhalb der eigentlichen Meßstrecke mit den Spannungselektroden.

Funktionsnotwendig für die erfindungsgemäße elektrische Meßanordnung sind feststehende elektrische Eigenschaften der Flüssigkeit. Sind die elektrischen Eigenschaften der Flüssigkeit nicht bekannt oder schwanken sie, so kann zur Korrektur eine separater Meßsensor, insbesondere auch in Form eines Streufeldsensors, zu Kalibrierungszwecken vorgesehen sein, um also eine Normierung auf die jeweils gemessene Leitfähigkeit zu ermöglichen.

Das Grundprinzip der Erfindung geht davon aus, daß die Meßelektroden der Meßsensoren in einer Ebene liegen. Grundsätzlich wäre es auch möglich, in einem Behälter zwei oder mehrere Meßsensoren mit jeweils zwei Meßelektroden oder drei Meßelektroden anzuordnen. Dann könnte man z. B. bei über 45° reichenden Neigungen von einem Meßsensor auf den anderen Meßsensor umschalten. Bei einem an allen Wandungen mit Meßsensoren bestückten Behälter könnte man eine Drehung des Behälters in jede beliebige Richtung durch Umschalten von einem Meßsensor auf den anderen Meßsensor meßtechnisch erfassen.

Es gibt nun viele Möglichkeiten, die Lehre der Erfindung auszugestalten und weiterzubilden, wozu auf die dem Anspruch 1 nachgeordneten Ansprüche verwiesen werden darf.

Im folgenden wird die Erfindung anhand einer lediglich Ausführungsbeispiele darstellenden Zeichnung näher erläutert. In der Zeichnung zeigt
- Fig. 1: in schematischer Darstellung einen Behälter mit darin befindlicher Flüssigkeit und einer entsprechenden Meßanordnung,
- Fig. 2: ein besonders bevorzugtes Ausführungsbeispiel eines Meßsensors gemäß der Erfindung,
- Fig. 2a: in schematischer Darstellung in Draufsicht eine bestimmte Anordnung der Meßelektroden,
- Fig. 3: in, hinsichtlich der Darstellungsart, Fig. 1 entsprechender Darstellung eine für eine Neigungsmessung abgeänderte erfindungsgemäße Meßanordnung,
- Fig. 4: die Meßanordnung aus Fig. 3 mit geeignetem Behälter,
- Fig. 5: die Meßanordnung aus Fig. 3 mit in die andere Richtung geneigtem Behälter, etwas anderer Anordnung der Meßelektroden und einer Darstellung des Einflusses unterschiedlich hoher Füllstände der Flüssigkeit für die Meßgenauigkeit,
- Fig. 6: in Draufsicht ein Substrat einer in Planartechnik ausgeführten Meßanordnung mit vier Meßsensoren,
- Fig. 7: die Meßanordnung aus Fig. 6 in schematischer Darstellung mit der dazu gehörenden Auswerteschaltung,
- Fig. 8: in einer im Grundsatz Fig. 5 entsprechenden Darstellung ein Ausführungsbeispiel mit einer Trennwand im Behälter,
- Fig. 9: in einer im Grundsatz Fig. 5 entsprechenden Darstellung ein Ausführungsbeispiel mit einer Hilfsflüssigkeit über der Flüssigkeit,
- Fig. 10: in einer Fig. 9 entsprechenden Darstellung einen mit Flüssigkeit und Hilfsflüssigkeit vollständig gefüllten Behälter,
- Fig. 11: ein Ausführungsbeispiel einer erfindungsgemäßen Meßanordnung in Verbindung mit einem Verformungskörper zur Neigungsmessung.

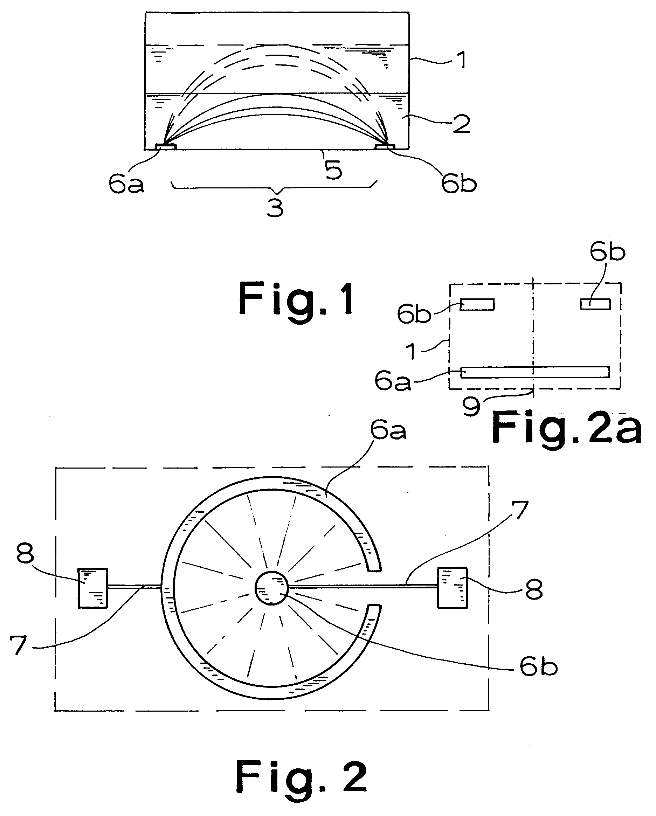

Fig. 1 zeigt zunächst die grundsätzliche Konstruktion einer elektrischen Meßanordnung zur Messung des Füllstandes oder auch anderer daraus abgeleiteter mechanischer Daten einer in einem Behälter 1 befindlichen, elektrisch leitenden Flüssigkeit 2, bei der es sich insbesondere um normal leitendes Wasser handeln kann. Im übrigen kann dieses System aber auch für alle anderen elektrisch leitenden Flüssigkeiten eingesetzt werden.

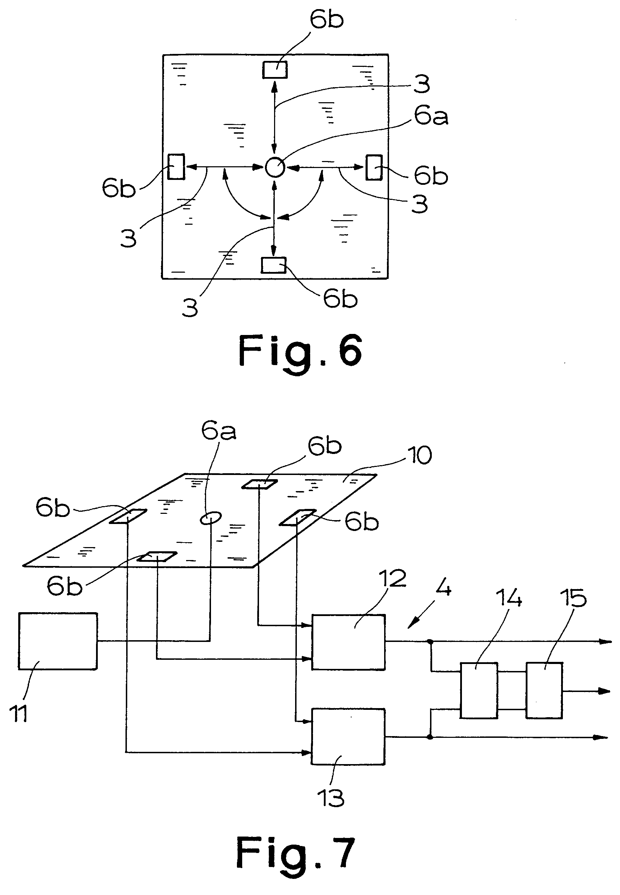

Die in Fig. 1 in einer prinzipiellen Darstellung gezeigte elektrische Meßanordnung weist einen Meßsensor 3 auf. Einem solchen Meßsensor 3 ist regelmäßig eine Auswerteschaltung 4 nachgeschaltet, wie sie im grundsätzlichen Blockschaltbild beispielsweise in Fig. 7 dargestellt ist. Das ist alles aus dem Stand der Technik bekannt.

Fig. 1 zeigt, daß der Meßsensor 3 als Streufeldsensor mit zwei in einem bestimmten seitlichen Abstand voneinander liegende Meßelektroden 6a, 6b ausgeführt ist. Hier wo es um die Messung des Füllstandes der Flüssigkeit im Behälter 1 geht, sind die beiden Meßelektroden 6a, 6b in einer Ebene, nämlich am Boden 5 des Behälters 1 angeordnet. Sie haben also praktisch das gleiche Niveau, was die meßtechnische Auswertung vereinfacht. Angedeutet ist das sich in der Flüssigkeit 2 ausbildende Streufeld. Dadurch verändert sich der mit dem Meßsensor 3 gemessene Meßwert signifikant mit der Füllhöhe bzw. dem Füllstand der Flüssigkeit 2. Aus dem Füllstand kann man dann andere mechanische Daten der Flüssigkeit 2, beispielsweise deren Volumen, errechnen. Man kann anhand von Fig. 1 unschwer verstehen, daß die Meßelektroden 6a, 6b auch in unterschiedlichen Ebenen liegen können, insbesondere winklig zueinander, beispielsweise Meßelektrode 6a am Boden 5 des Behälters 1 und die andere Meßelektrode 6b an der Seitenwand des Behälters 1. Das kann unter bestimmten meßtechnischen Voraussetzungen ebenfalls zweckmäßig sein.

Um eine möglichst korrekte Erfassung des Füllstandes der Flüssigkeit 2 im Behälter 1 zu ermöglichen, sind in Fig. 1 die Meßelektroden 6 des Meßsensors 3 nahe der äußersten Rändern des Bodens 5 angeordnet. Es gilt im übrigen, daß die Darstellung von zwei Meßelektroden 6a, 6b nur eine prinzipielle Darstellung ist. Für sich bekannt ist es für Streufeldsensoren, aus meßtechnischen Gründen die Stromführung über die Elektroden von Spannungsmessung zu trennen, also mit Stromelektroden und Spannungselektroden zu arbeiten.

Streufeldsensoren der in Rede stehenden Art können in besonders zweckmäßiger Weise in Planartechnik auf einem Substrat ausgeführt sein. Dazu können auf einem Substrat die elektrisch leitenden, flächigen Strukturen, vorzugsweise aufgebracht in Planartechnik, insbesondere in Dünnfilmtechnik, vorgesehen sein, wobei dann an bestimmten Stellen ein gegen die betroffene Flüssigkeit 2 beständiges Dielektrikum als Abdeckung in Planartechnik oder anderer Beschichtungstechnik aufgebracht wird.

Fig. 2 zeigt eine ganz bevorzugte Ausgestaltung eines Meßsensors 3, bei dem die eine Meßelektrode 6a eine im wesentlichen geschlossene kreisförmige Elektrodenfläche und die andere Meßelektrode 6b eine im Mittelpunkt des Kreisringes liegende, kreisförmige Elektrodenfläche bildet. Die Ränder der beiden Elektrodenflächen weisen einen erheblichen radialen Abstand voneinander auf. Man erkennt hier, daß die Zuleitungen 7 von der Anschlußfläche 8 auf dem hier nur gestrichelt dargestellten Substrat möglichst schmal gemacht werden, um die auftretenden Streufelder möglichst gering zu halten. Bei der dargestellten Anordnung der Meßelektroden 6 des Meßsensors 3 ist gewährleistet, daß das insgesamt ausgemessene Streufeld unabhängig von der Neigung des Behälters 1 nach jeder der möglichen Richtungen konstant bleibt.

Bislang ist nur das Funktionsprinzip einer elektrischen Meßanordnung mit im Prinzip einem Meßsensor 3, der ein Streufeld über den Meßelektroden 6 ausbildet, erläutert worden. Dazu bleibt noch zu erwähnen, daß die maximal meßbare Füllhöhe etwa das 3,0-fache des Abstandes der Meßelektroden 6 beträgt, wenn man eine ausreichende Meßgenauigkeit voraussetzt und wenn man die in Fig. 1 dargestellten, weit beabstandeten Meßelektroden 6 einsetzt. Bei der in Fig. 2 dargestellten Ausführungsform verringert sich zwar die meßbare maximale Füllhöhe auf ungefähr das 2,5-fache des Durchmessers der Meßelektrode 6a, dafür hat man dann aber den Vorteil der Neigungsabhängigkeit des Meßwertes.

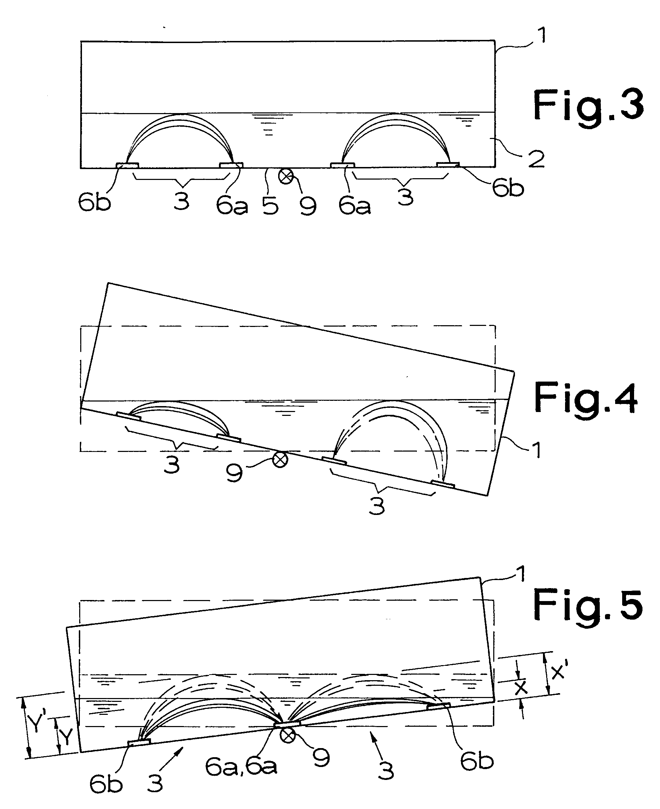

Im Rahmen der Erfindung ist Ausgangspunkt eine elektrische Meßanordnung mit mindestens zwei Meßsensoren 3 mit jeweils zwei in einem bestimmten seitlichen Abstand voneinander liegenden, mit der Flüssigkeit 2 kontaktierenden Meßelektroden 6a, 6b, bei der der Behälter 1 um eine jedenfalls virtell mittig am Boden 5 befindliche Kippachse 9 kippbar ist, beidseits der Kippachse 9 jeweils ein Meßsensor 3 angeordnet ist und die Meßwerte der beiden Meßsensoren 3 in der Auswerteschaltung 4 auswertbar sind. Diese Auswertung erfolgt in einem Differenz-Auswerteverfahren. Für die Lehre wensenlich ist dabei, daß die Meßelektroden 6 der Meßsensoren 3 am Boden 5 des Behälters 1 flächig angeordnet sind und daß die Meßsensoren 3 jeweils als Streufeldsensor mit einem sich in der Flüssigkeit 2 zum Flüssigkeitsspiegel hin erstreckenden Streufeld ausgeführt sind. Das läßt Fig. 3 besonders deutlich erkennen.

Die Kippachse 9 muß nicht körperlich vorhanden sein, sie ist systemimmanent jedenfalls stets auch virtuell vorhanden, auch wenn man den Behälter 1 in Fig. 4 beispielsweise parallel zu sich selbst verlagert. Wesentlich ist, daß im Grundsatz beidseits der "Mitte" jeweils ein Meßsensor 3 angeordnet ist. Man erkennt aus Fig. 3, daß bei ebener Ausrichtung des Behälters 1 auch der Flüssigkeitsspiegel im Behälter 1 im Bereich beider Meßsensoren 3 im gleichen Abstand vom Boden 5 liegt, so daß im Rahmen der Meß- und Auswertegenauigkeit die gemessenen Streufelder identisch sind. In Fig. 4 erkennt man dementgegen, daß sich das Streufeld des Meßsensors 3 rechts wegen der Neigung des Behälters 1 erheblich vergrößert hat, während das Streufeld des links dargestellten Meßsensors 3 durch die Neigung des Behälters 1 eingeschnürt worden ist. Eine Auswertung mit der Auswerteschaltung 4 macht also beispielsweise eine Neigungsmessung für den Behälter 1 möglich. Das läßt sich in Lagebestimmungsystemen, in "elektronischen Wasserwaagen" usw. mit großem Vorteil einsetzen, insbesondere wenn man berücksichtigt, daß die Meßsensoren 3 in Planartechnik ausgeführt sein können, also auch miniaturisierbar sind.

Fig. 5 macht deutlich, daß es bei der anhand der Fig. 3 und 4 erläuterten Neigungsmessung hinsichtlich der Auswertung günstiger ist, wenn die normale Höhe des Füllstandes derr Flüssigkeit 2 im Behälter 1 möglichst gering ist. Man erkennt, daß die relative Änderung x/y in Fig. 5 erheblich größer ist als die relative Änderung x'/y'. Je weiter also die außen liegenden Meßelektroden 6b von den in der Mitte liegenden Meßelektroden 6a entfernt sind und je geringer die Füllhöhe ist, desto höher ist also die Meßempfindlichkeit, wenngleich der zur Verfügung stehende Winkel-Meßbereich natürlich entsprechend geringer ist.

Eine elektrische Meßanordnung der zuvor erläuterten Art kann in sich selbst geschlossen als Meßanordnung für sonstige mechanische Daten eingesetzt werden kann. Der Behälter samt der darin befindlichen Flüssigkeit kann selbst einen Teil der Meßanordnung bilden, so daß andere mechanische Daten, beispielsweise die Neigung des Behälters mit darin befindlicher Flüssigkeit, eine Rotation des Behälters, eine Linearbeschleunigung des Behälters und andere mechanische Daten meßtechnisch erfaßt werden können, jeweils indem das Verhalten der Flüssigkeit im Behälter meßtechnisch erfaßt wird.

Wie zuvor schon angesprochen worden ist, kann es sich im übrigen empfehlen, außer den Meßsensoeren 3 am Boden 5 des Behälters 1 gleichartige Meßsensoren 3 an mindestens einer Wand des Behälters 1 anzuordnen, um so auch über 45° reichende Neigungen durch Umschalten vom einen Meßsensor 3 auf den nächsten Meßsensor 3 erfassen zu können.

Um auftretende, die Messung verfälschende Streufelder zwischen verschiedenen Meßsensoren 3 zu vermeiden, empfiehlt es sich, daß die der Kippachse 9 nahen Meßelektroden 6a der beiden Meßsensoren 3 auf gleichem Potential liegen. Der nächste Schritt ist dabei dann die Ausgestaltung gemäß Fig. 5, die dadurch gekennzeichnet ist, daß die der Kippachse 9 nahen Meßelektroden 6a der beiden Meßsensoren 3 in einer einzigen Elektrodenfläche zusammengefaßt sind. Das ist natürlich eine vom Schaltungsaufbau her erhebliche Vereinfachung, wobei man nur darauf achten muß, daß die Elektrodenfläche der die beiden Meßelektroden 6a bildenden Elektrode auf die Kippachse 9, sei sie auch nur virtuell vorhanden, zentriert ist. Möglich ist es aber auch, mit quer angeordneten Meßelektroden zu arbeiten, wobei dann eine Meßelektrode 6a quer über die Kippachse 9 verläuft, wie in Fig. 2a schematisch darstellt.

An sich sind die Meßanordnungen nach den Fig. 3 bis 5 nur hinsichtlich einer Neigung bzw. Kippung um die Kippachse 9 empfindlich, um eine dazu senkrecht verlaufende Kippachse sind sie nicht neigungsempfindlich oder nur sehr wenig neigungsempfindlich. Will man Neigungen um zueinander senkrecht verlaufende Kippachsen, also letztlich Neigungen in alle Richtungen messen können, so empfiehlt es sich, daß zusätzlich zu dem ersten Paar von Meßsensoren 3 ein zweites Paar von Meßsensoren 3 vorgesehen und winklig, vorzugsweise um 90°, versetzt gegenüber dem ersten Paar von Meßsensoren 3 auf denselben Mittelpunkt wie das erste Paar von Meßsensoren 3 zentriert angeordnet ist. Fig. 6 zeigt eine solche Meßanordnung mit zwei Paaren von Meßsensoren 3, wobei dann ergänzend gilt, daß die dem Mittelpunkt nahen Meßelektroden 6a aller Meßsensoren 3 in einer einzigen Elektrodenfläche zusammengefaßt sind. Im dargestellten Ausführungsbeispiel sind die durch die bogenförmigen Pfeile angedeuteten Winkel jeweils 90°, mit entsprechend abgeänderten Auswertungsprogrammen kann man natürlich auch mit nicht exakt im 90°-Winkel stehenden zwei Paaren von Meßsensoren 3 arbeiten.

Fig. 7 zeigt die Meßanordnung aus Fig. 6 mit dem schematisch angedeuteten Substrat 10 mit den aufgebrachten Meßelektroden 6a, 6b, die in Planartechnik hergestellt worden sind, mit einem Generator 11, einer ersten Subtraktionsschaltung 12 für das erste Paar von Meßsensoren 3, einer zweiten Subtraktionsschaltung 13 für das zweite Paar von Meßsensoren 3, einer Nullagen-Feststellstufe 14 und einer Und-Schaltung 15. An den durch die Pfeile dargestellten Ausgängen stehen die Neigungs-Meßsignale für die x-Richtung oben, für die y-Richtung unten an. An dem mittleren Ausgang wird ein Signal nur dann abgegeben, wenn sich der Behälter 1 exakt in horizontaler Ausrichtung befindet, also eine Neigung in keine Richtung gegeben ist. Das ist eine Möglichkeit, die entsprechende Auswertung mit der Auswerteschaltung 4 durchzuführen.

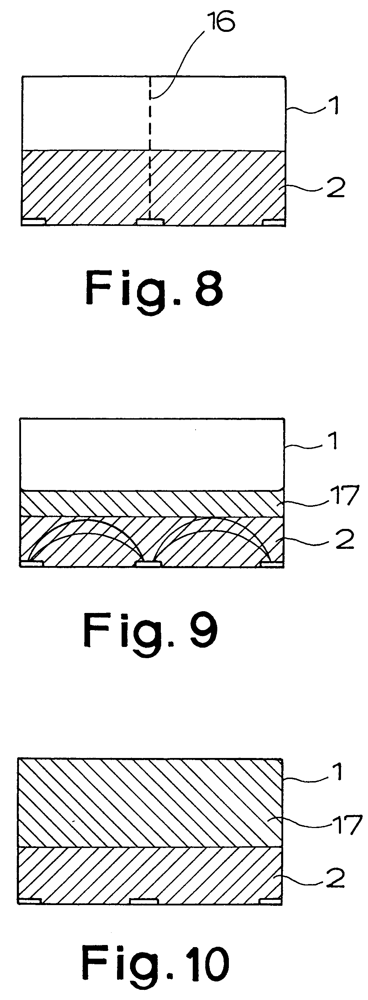

Fig. 8 zeigt nun ein in mechanischer Hinsicht weiter bevorzugtes Ausführungsbeispiel, das dadurch gekennzeichnet ist, daß im Behälter 1 mindestens ein Trennelement 16 angeordnet oder ausgebildet ist, daß durch das Trennelement ein bestimmter, erhöhter Strömungswiderstand für die Flüssigkeit beim Strömen von einer Seite des Trennelementes 16 zur anderen Seite des Trennelementes 16 gegeben ist und daß so eine bestimmte Dämpfung vorgebbar ist. Die Dämpfungskonstante des hier als Neigungssensor verwendeten Behälters 1 läßt sich durch Anzahl und Größe der Öffnungen im Trennschalter 16, das hier als Lochblech ausgeführt ist, bestimmen. Eine Alternative könnte auch darin bestehen, das Trennelement 16 als Trennwand mit Öffnungen oder als Doppel-Trennwand mit einem Unterströmkanal auszuführen, den Behälter 1 also gewissermaßen in zwei Teile mit einer Strömungsverbindung kleinen Querschnittes aufzuteilen.

Für die meßtechnische Anwendungen empfiehlt es sich im übrigen, daß von der Auswerteschaltung 4 ein akustisches Auswertesignal auslösbar ist, insbesondere, daß je nach dem die Kipprichtung anzeigende Vorzeichen des Ausgangssignals unterschiedliche Auswertesignale auslösbar sind. Insbesondere kann man so beispielsweise bei einer elektronischen Wasserwaage "blind" arbeiten, was für Anwendungen von großem Vorteil ist. Im übrigen wären natürlich auch entsprechende optische Signale sinnvoll, wenn das im jeweiligen Anwendungsfall zweckmäßig erscheint.

Generell lassen sich die Streufeldsensoren der in Rede stehenden Art, jedenfalls dann, wenn sie in Planartechnik ausgeführt sind, bei Temperaturen bis zu ca. 600 K betreiben. Man muß dafür natürlich dann schon die passenden Werkstoffe wählen. Im übrigen kann man, wie eingangs erläutern worden ist, zum Zwecke der Kalibrierung bzw. Normierung noch einen als reinen Leitfähigkeitssensor eingesetzten Streufeldsensor vorsehen, was allerdings in den Figuren im einzelnen dargestellt ist.

Für die Auswerteschaltung gelten übliche schaltungstechnische Ausgestaltungmöglichkeiten. Insbesondere ist es zweckmäßig, daß die Auswerteschaltung 4 als Auswerteelektronik ausgeführt ist und, insbesondere, einen Mikroprozessor aufweist oder in einen Mikroprozessor integriert ist.

Meßtechnisch kann es problematisch sein, daß die elektrisch leitende Flüssigkeit 2 in dem Behälter 1 an der Wandung des Behälters 1 anhaftet. Dadurch wird die Füllstandsmessung verfälscht. Diesen Adhäsionseffekt kann man dadurch beseitigen, daß man den Behälter 1 oberhalb der elektrisch leitenden Flüssigkeit 2 mit einer elektrisch nicht leitenden Hilfsflüssigkeit 17 auffüllt. Nur der Bereich der elektrisch leitenden Flüssigkeit 2 ist meßtechnisch wirksam. Der Rand der elektrisch leitenden Flüssigkeit 2 wird aber durch die elektrisch nicht leitende, darüber gefüllte Hilfsflüssigkeit 17 begradigt bzw. von Adhäsionskräften befreit. Natürlich gilt der Begriff "elektrisch leitend" im Vergleich mit dem Begriff "nicht elektrisch leitend" relativ, d. h. daß auch eine nur sehr gering leitende Hilfsflüssigkeit 17 unter Umständen zur Abdeckung der elektrisch leitenden Flüssigkeit 2 benutzt werden kann.

Während Fig. 9 die zuvor erläuterte Abdeckung mit einer Hilfsflüssigkeit 17 insoweit zeigt, als der Behälter 1 nach wie vor dann nicht vollständig mit Flüssigkeit gefüllt ist, zeigt Fig. 10 eine bevorzugte oder jedenfalls manchmal zu bevorzugende Form, bei der der Behälter 1 mit der Flüssigkeit 2 und der Hilfsflüssigkeit 17 komplett gefüllt ist. Das läßt mitunter Störeffekte einen geringeren Einfluß haben. Man könnte auch vorsehen, den Behälter 1 oberhalb der Flüssigkeit 2 bzw. der Hilfsflüssigkeit 17 (praktisch) zu evakuieren, so daß sich oberhalb des Flüssigkeitsspiegels nur der Sättigungsdampfdruck der Flüssigkeit 2 bzw. der Hilfsflüssigkeit 17 einstellt. Hier ist ein entsprechend passender Druck im Restvolumen zu wählen.

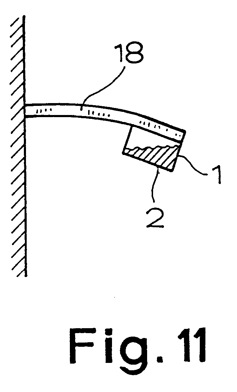

Fig. 11 zeigt nun einen Anwendungsfall für eine erfindungsgemäße Meßanordnung dergestalt, daß der Behälter 1 in Verbindung mit einem bei Verformung insbesondere durch Gewichtseinwirkung seine Neigung ändernden Verformungskörper 18 eingesetzt ist. Bei dem Verformungskörper 18 handelt es sich hier um einen Biegestab, der beispielsweise in einer Waage der Aufnahme eines zu wiegenden Gewichts dienen kann.

Ordnet man den Behälter 1 der erfindungsgemäßen Meßanordnung am Verformungskörper 18 an, so ergibt sich der Neigungswinkel proportional zur in den Verformungskörpern 18 eingeleiteten Kraft, beispielsweise Gewichtskraft. Die erfindungsgemäß hier als Neigungssensor eingesetzte Meßanordnung kann eine sehr hohe Empfindlichkeit haben (beispielsweise 1 mV/0,001°). Von besonderer Bedeutung ist bei dieser elektrischen Meßanordnung die Tatsache, daß man mit dieser elektrischen Meßanordnung nicht nur die durch Gewichtseinwirkung verursachte Neigung des Behälters 1 meßtechnisch erfassen kann, sondern genauso bereits erfassen kann, ob sich die unbelastete Waage in der Horizontalen befindet. Bei entsprechender Gestaltung der Auswerteschaltung 4 wäre es beispielsweise denkbar, vor jeder eigentlichen Gewichtsmessung zunächst eine Überprüfung der Ausrichtung der Waage in der Horizontalen vorzunehmen und, bei Abweichung, eine eigenständige Kalibrierung durchzuführen.

Die als Neigungssensor einzusetzende Meßanordnung kann man in Verbindung mit einem Verformungskörper 18 auch für Verformungsmessungen als solche, beispielsweise für die Messung von Lageabweichungen bei Werkstücken, Gebäuden oder Brücken einsetzen. Es gibt hier sehr weite Anwendungsfelder.

Die Erfassung der Neigung des Flüssigkeitsspiegels im Behälter 1 kann in vielerlei anderen Anwendungsfeldern eingesetzt werden, beispielsweise zur Linear-Beschleunigungsmessung, im Rahmen einer Rotationsmessung, bei der sich durch Radialbeschleunigung der Flüssigkeitsspiegel verändert, entsprechend auch zur Drehzahlmessung etc. Die Miniaturisierbarkeit durch die flächige Anordnung der Meßelektroden 6 der Meßsensoren 3 am Boden 5 des Behälters 1, insbesondere im Rahmen der Planartechnik auf einem Substrat 10, ist dabei von ganz besonderem Vorteil.

## Patentansprüche

1. Elektrische Meßanordnung zur konduktometrischen Messung des Füllstandes oder daraus abgeleitetermechanischer Daten einer in einem vorzugsweise geschlossenen Behälter (1) befindlichen, elektrisch leitenden Flüssigkeit (2), die feststehende elektrische Eigenschaften aufweist, mit mindestens zwei Meßsensoren (3) mit jeweils zwei in einem bestimmten seitlichen Abstand voneinander liegenden, mit der Flüssigkeit (2) kontaktierenden Meßelektroden (6a, 6b), wobei der Behälter (1) um eine jedenfalls virtuell mittig am Boden (5) befindliche Kippachse (9) kippbar ist, wobei beidseits der Kippachse (9) jeweils ein Meßsensor (3) angeordnet ist und wobei die Meßwerte der beiden Meßsensoren (3) in einer Auswerteschaltung (4) auswertbar sind, **dadurch gekennzeichnet**, daß die Meßelektroden (6) der Meßsensoren (3) am Boden (5) des Behälters (1) flächig angeordnet und die Meßsensoren (3) jeweils als Streufeldsensor mit einem sich in der Flüssigkeit (2) zum Flüssigkeitsspiegel hin erstreckenden Streufeld ausgeführt sind.

2. Meßanordnung nach Anspruch 1, dadurch gekennzeichnet, daß der Behälter (1) samt der darin befindlichen Flüssigkeit (2) selbst Teil der Meßanordnung ist.

3. Meßanordnung nach Anspruch 1 oder 2, dadurch gekennzeichnet, daß die Meßelektroden (6a, 6b) der Meßsensoren (3) im wesentlichen in einer Ebene liegen.

4. Meßanordnung nach einem der Ansprüche 1 bis 3, dadurch gekennzeichnet, daß außer den Meßsensoren (3) am Boden (5) des Behälters (1) gleichartige Meßsensoren (3) an mindestens einer Wand des Behälters (1) angeordnet sind.

5. Meßanordnung nach einem der Ansprüche 1 bis 4, dadurch gekennzeichnet, daß die Meßelektroden (6) nahe der äußersten Ränder des Bodens (5) angeordnet sind.

6. Meßanordnung nach einem der Ansprüche 1 bis 4, dadurch gekennzeichnet, daß die eine Meßelektrode (6a) eine im wesentlichen geschlossene kreisringförmige Elektrodenfläche und die andere Meßelektrode (6b) eine im Mittelpunkt des Kreisringes liegende kreisförmige Elektrodenfläche bildet.

7. Meßanordnung nach einem der Ansprüche 1 bis 6, dadurch gekennzeichnet, daß die Meßelektroden (6) (jeweils) in Planartechnik auf einem Substrat (10) ausgeführt sind.

8. Meßanordnung nach einem der Ansprüche 1 bis 7, dadurch gekennzeichnet, daß die der Kippachse (9) nahen Meßelektroden (6a) der beiden Meßsensoren (3) auf gleichem Potential liegen.

9. Meßanordnung nach Anspruch 8, dadurch gekennzeichnet, daß die der Kippachse (9) nahen Meßelektroden (6a) der beiden Meßsensoren (3) in einer einzigen Elektrodenfläche zusammengefaßt sind.

10. Meßanordnung nach einem der Ansprüche 1 bis 9, dadurch gekennzeichnet, daß zusätzlich zu dem ersten Paar von Meßsensoren (3) am Boden (5) ein zweites Paar von Meßsensoren (3) am Boden (5) vorgesehen und in einem Winkel, vorzugsweise um 90°, versetzt gegenüber dem ersten Paar von Meßsensoren (3) am Boden (5) auf den selben Mittelpunkt wie das erste Paar von Meßsensoren (3) am Boden (5) zentriert angeordnet ist.

11. Meßanordnung nach Anspruch 10, dadurch gekennzeichnet, daß die dem Mittelpunkt nahen Meßelektroden (6a) aller Meßsensoren (3) in einer einzigen Elektrodenfläche zusammengefaßt sind.

12. Meßanordnung nach einem der Ansprüche 1 bis 11, dadurch gekennzeichnet; daß im Behälter (1) mindestens ein Trennelement (16) angeordnet oder ausgebildet ist, daß durch das Trennelement (16) ein bestimmter, erhöhter Strömungswiderstand für die Flüssigkeit beim Strömen von einer Seite des Trennelementes (16) gegeben ist und daß so eine bestimmte Dämpfung vorgebbar ist.

13. Meßanordnung nach Anspruch 12, dadurch gekennzeichnet, daß das Trennelement (16) als Lochblech, als Trennwand mit Öffnungen oder als Doppeltrennwand mit Unterströmkanal ausgeführt ist.

14. Meßanordnung nach einem der Ansprüche 1 bis 13, dadurch gekennzeichnet, daß von der Auswerteschaltung (4) je nach dem die Kipprichtung anzeigenden Vorzeichen des Ausgangssignals unterschiedliche akustische Auswertesignale auslösbar sind.

15. Meßanordnung nach einem der Ansprüche 1 bis 14, dadurch gekennzeichnet, daß den Meßsensoren (3) ein als Leitfähigkeitssensor ausgeführter Meßsensor (3), insbesondere auch in Form eines Streufeldsensors, zu Kalibrierungszwecken zugeordnet ist.

16. Meßanordnung nach einem der Ansprüche 1 bis 15, dadurch gekennzeichnet, daß die Auswerteschaltung (4) als Auswerteelektronik ausgeführt ist und einen Mikroprozessor aufweist oder in einem Mikroprozessor integriert ist.

17. Meßanordnung nach einem der Ansprüche 1 bis 16, dadurch gekennzeichnet, daß der Behälter (1) oberhalb der elektrisch leitenden Flüssigkeit (2) mit einer elektrisch nicht leitenden Hilfsflüssigkeit (17) geringeren spezifischen Gewichts aufgefüllt ist.

18. Meßanordnung nach Anspruch 17, dadurch gekennzeichnet, daß der Behälter (1) mit der Flüssigkeit (2) und der Hilfsflüssigkeit (17) komplett gefüllt ist.

19. Meßanordnung nach einem der Ansprüche 1 bis 17, dadurch gekennzeichnet, daß der Behälter (1) oberhalb der Flüssigkeit (2) bzw. der Hilfsflüssigkeit (17) evakuiert ist.

20. Meßanordnung nach einem der Ansprüche 1 bis 19, dadurch gekennzeichnet, daß die Auswerteschaltung (4) zur Aufnahme eines Füllhöhenprofils ausgebildet ist.

21. Verwendung einer elektrischen Meßanordnung nach einem der Ansprüche 1 bis 20 zur Neigungsmessung.

## Claims

1. An electrical measuring arrangement for the conductometric measurement of the level of an electrically conducting liquid (2) or of mechanical data derived therefrom, which liquid has fixed electrical properties and which is situated in a container (1) which is preferably closed, with at least two measuring sensors (3), each having two measuring electrodes (6a, 6b) situated at a definite lateral distance from each other and contacting the liquid (2), wherein the container (1) can be tilted about a tilting axis (9) situated at least virtually centrally on the base (5), wherein a measuring sensor (3) is disposed in each case on both sides of the tilting axis (9) and wherein the measured values from the two measuring sensors (3) can be evaluated in an evaluation circuit (4), characterised in that the measuring electrodes (6) of the measuring sensors (3) are disposed two-dimensionally at the base (5) of the container (1) and each of the measuring sensors (3) is designed as a scatter field sensor with a scatter field extending in the liquid (2) up to the liquid level.

2. A measuring arrangement according to claim 1, characterised in that the container (1), together with the liquid (2) situated therein, is itself part of the measuring arrangement.

3. A measuring arrangement according to claim 1 or 2, characterised in that the measuring electrodes (6a, 6b) of the measuring sensors (3) lie substantially in a plane.

4. A measuring arrangement according to any one of claims 1 to 3, characterised in that in addition to the measuring sensors (3) at the base (5) of the container (1) measuring sensors (3) of the same type are disposed on at least one wall of the container (1).

5. A measuring arrangement according to any one of claims 1 to 4, characterised in that the measuring electrodes (6) are disposed near the outermost edges of the base (5).

6. A measuring arrangement according to any one of claims 1 to 4, characterised in that one measuring electrode (6a) forms a substantially closed circular annular electrode surface and the other measuring electrode (6b) forms a circular electrode surface situated at the centre of the circular annulus.

7. A measuring arrangement according to any one of claims 1 to 6, characterised in that the measuring electrodes (6) are (each) formed on a substrate (10) by the planar technique.

8. A measuring arrangement according to any one of claims 1 to 7, characterised in that the measuring electrodes (6a) of the two measuring sensors (3) which are near the tilting axis (9) are at the same potential.

9. A measuring arrangement according to claim 8, characterised in that the measuring electrodes (6a) of the two measuring sensors (3) which are near the tilting axis (9) are included in a single electrode surface.

10. A measuring arrangement according to any one of claims 1 to 9, characterised in that in addition to the first pair of measuring sensors (3) at the base (5) a second pair of measuring sensors (3) is provided at the base (5) and is disposed displaced at an angle, preferably by 90°, in relation to the first pair of measuring sensors (3) at the base (5), centred on the same centre as the first pair of measuring sensors (3) at the base (5).

11. A measuring arrangement according to claim 10, characterised in that the measuring electrodes (6a) of all the measuring sensors (3) which are near to the centre are included in a single electrode surface.

12. A measuring arrangement according to any one of claims 1 to 11, characterised in that at least one separating element (16) is disposed or formed in the container (1), that a definite, increased resistance to flow is created by the separating element (16) for the liquid when flowing from one side of the separating element (16), and that a definite degree of damping can thus be predetermined.

13. A measuring arrangement according to claim 12, characterised in that the separating element (16) is designed as a perforated plate, as a partition wall with openings or as a double partition wall with an underflow channel.

14. A measuring arrangement according to any one of claims 1 to 13, characterised in that different acoustic evaluation signals can be triggered by the evaluation circuit (4) depending on the algebraic sign of the output signal, which algebraic sign indicates the direction of tilting.

15. A measuring arrangement according to any one of claims 1 to 14, characterised in that a measuring sensor (3) designed as a conductivity sensor, particularly in the form of a scatter field sensor also, is associated with the measuring sensors (3) for calibration purposes.

16. A measuring arrangement according to any one of claims 1 to 15, characterised in that the evaluation circuit (4) is designed as an electronic processing unit and comprises a microprocessor or is integrated in a microprocessor.

17. A measuring arrangement according to any one of claims 1 to 16, characterised in that the container (1) is filled above the electrically conducting liquid (2) with an electrically non-conducting auxiliary liquid (17) of lower specific gravity.

18. A measuring arrangement according to claim 17, characterised in that the container (1) is completely filled with the liquid (2) and the auxiliary liquid (17).

19. A measuring arrangement according to any one of claims 1 to 17, characterised in that the container (1) is evacuated above the liquid (2) or above the auxiliary liquid (17).

20. A measuring arrangement according to any one of claims 1 to 19, characterised in that the evaluation circuit (4) is designed for recording a filling height profile.

21. The use of an electrical measuring arrangement according to any one of claims 1 to 20 for the measurement of inclination.

## Revendications

1. Dispositif de mesure électrique pour la mesure conductométrique du niveau, ou de données mécaniques qui en dérivent, d'un liquide (2) électriquement conducteur se trouvant dans un récipient (1) de préférence fermé, qui présente des propriétés électriques fixes, comprenant au moins deux détecteurs de mesure (3) munis respectivement de deux électrodes de mesure (6a, 6b) en contact avec le liquide (2), qui sont disposées avec un écart latéral mutuel déterminé, dans lequel le récipient (1) peut basculer autour d'un axe de basculement (9) se trouvant en tout cas virtuellement au milieu du fond (5), dans lequel, de part et d'autre de l'axe de basculement (9) est disposé respectivement un détecteur de mesure (3), et dans lequel les valeurs de mesure des deux détecteurs de mesure (3) peuvent être évaluées dans un circuit de détection décision (4), caractérisé en ce que les électrodes de mesure (6) des détecteurs de mesure (3) sont disposées en nappe au fond (5) du récipient (1) et les détecteurs de mesure (3) sont réalisés respectivement sous forme de détecteurs à zones de dispersion munis d'une zone de dispersion s'étendant dans le liquide (2) en direction de la surface du liquide.

2. Dispositif de mesure selon la revendication 1, caractérisé en ce que le récipient (1), y compris le liquide (2) qui s'y trouve, fait lui-même partie du dispositif de mesure.

3. Dispositif de mesure selon la revendication 1 ou 2, caractérisé en ce que les électrodes de mesure (6a, 6b) des détecteurs de mesure (3) se trouvent essentiellement dans un seul plan.

4. Dispositif de mesure selon l'une quelconque des revendications 1 à 3, caractérisé en ce que, en dehors des détecteurs de mesure (3) au fond (5) du récipient (1), sont disposés des détecteurs de mesure (3) du même type contre au moins une paroi du récipient (1).

5. Dispositif de mesure selon l'une quelconque des revendications 1 à 4, caractérisé en ce que les électrodes de mesure (6) sont disposées à proximité des bords externes du fond (5).

6. Dispositif de mesure selon l'une quelconque des revendications 1 à 4, caractérisé en ce que la première électrode de mesure (6a) forme une surface d'électrode de forme circulaire essentiellement fermée et l'autre électrode de mesure (6b) forme une surface d'électrode circulaire disposée au centre du cercle.

7. Dispositif de mesure selon l'une quelconque des revendications 1 à 6, caractérisé en ce que les électrodes de mesure (6) sont réalisées (respectivement) dans une technique planaire sur un substrat (10).

8. Dispositif de mesure selon l'une quelconque des revendications 1 à 7, caractérisé en ce que les électrodes de mesure (6a) des deux détecteurs de mesure (3) proches de l'axe de basculement (9) se trouvent au même potentiel.

9. Dispositif de mesure selon la revendication 8, caractérisé en ce que les électrodes de mesure (6a) des deux détecteurs de mesure (3), proches de l'axe de basculement (9) sont rassemblées dans une seule surface d'électrode.

10. Dispositif de mesure selon l'une quelconque des revendications 1 à 9, caractérisé en ce que, en plus de la première paire de détecteurs de mesure (3) au fond (5), on prévoit une seconde paire de détecteurs de mesure (3) au fond (5), qui est disposée en formant un angle de préférence de 90°, en étant décalée par rapport à la première paire de détecteurs de mesure (3) au fond (5) et en étant centrée sur le même centre que celui de la première paire de détecteurs de mesure (3) au fond (5).

11. Dispositif de mesure selon la revendication 10, caractérisé en ce que les électrodes de mesure (6a) de tous les détecteurs de mesure (3), proches du centre, sont rassemblées en une seule surface d'électrodes.

12. Dispositif de mesure selon l'une quelconque des revendications 1 à 11, caractérisé en ce que, dans le récipient (1), est disposé ou réalisé au moins un élément de séparation (16), en ce que, à l'intervention de l'élément de séparation (16), une résistance à l'écoulement supérieure, déterminée est procurée pour le liquide lorsqu'il s'écoule depuis un côté de l'élément de séparation (16), et en ce qu'ainsi, un amortissement déterminé peut être prédéfini.

13. Dispositif de mesure selon la revendication 12, caractérisé en ce que l'élément de séparation (16) est réalisé en forme de tôle perforée, en forme de paroi de séparation munie d'ouvertures ou en forme de double paroi de séparation à canal d'écoulement inférieur.

14. Dispositif de mesure selon l'une quelconque des revendications 1 à 13, caractérisé en ce que, à partir du circuit de détection décision (4), chaque fois en fonction du signe de polarité du signal de départ indiquant la direction de basculement, différents signaux acoustiques d'évaluation peuvent être déclenchés.

15. Dispositif de mesure selon l'une quelconque des revendications 1 à 14, caractérisé en ce que, aux détecteurs de mesure (3) est attribué un détecteur de mesure (3) réalisé en forme de détecteur de la conductivité, en particulier également en forme de détecteur à zone de dispersion, à des fins de calibrage.

16. Dispositif de mesure selon l'une quelconque des revendications 1 à 15, caractérisé en ce que le circuit de détection décision (4) est réalisé en forme d'électronique d'évaluation et présente un microprocesseur ou bien est intégré dans un microprocesseur.

17. Dispositif de mesure selon l'une quelconque des revendications 1 à 16, caractérisé en ce que le récipient (1) est rempli, au-dessus du liquide (2) électriquement conducteur, à l'aide d'un liquide auxiliaire (17) non électriquement conducteur à poids volumique inférieur.

18. Dispositif de mesure selon la revendication 17, caractérisé en ce que le récipient (1) est rempli complètement avec le liquide (2) et le liquide auxiliaire (17).

19. Dispositif de mesure selon l'une quelconque des revendications 1 à 17, caractérisé en ce que en ce qu'on fait le vide dans le récipient (1) au-dessus du liquide (2) respectivement du liquide auxiliaire (17).

20. Dispositif de mesure selon l'une quelconque des revendications 1 à 19, caractérisé en ce que le circuit de détection décision (4) est réalisé pour l'enregistrement d'un profil de hauteur de remplissage.

21. Utilisation d'un dispositif de mesure électrique selon l'une quelconque des revendications 1 à 20 pour la mesure de l'inclinaison.
